# EUROPÄISCHE PATENTANMELDUNG

(11) **EP 1 193 480 A1**
(43) Veröffentlichungstag der Anmeldung: **03.04.2002**
(21) Anmeldenummer: 01122062.1
(22) Anmeldetag: 14.09.2001
(51) Int. Cl.: G01G 19/08, G01G 23/00, G01G 21/23

(54) **Wägemodul zur Verwiegung seitlich neigbarer Lasten**

(30) Priorität: 28.09.2000 DE 10048147
(71) Anmelder: Hottinger Baldwin Messtechnik GmbH, 64293 Darmstadt (DE)
(72) Erfinder: Bäumel, Helmut, 64367 Mühltal (DE); Müter, Johannes, 64625 Bensheim (DE); Will, Ronald, 64665 Alsbach-Hähnlein (DE)
(74) Vertreter: Behrens, Helmut, Dipl.-Ing.

(57) **Zusammenfassung**

Die Erfindung betrifft ein Wägemodul zur Verwiegung von geneigten Lasten an Fahrzeugen, Tankanlagen oder anderen Behältern, das aus einer pendelnd gelagerten Wägezelle (2) in einer umgebenden Gehäuseeinheit (1) besteht. Dabei ist in der Gehäuseeinheit (1) eine Krafteinleitungseinheit (3) vorgesehen, die sich einerseits auf die Wägezelle (2) abstützt, andererseits durch Federelemente (14) an inneren Gehäuseflächen (7) angeordnet ist. Dabei ist die federnde Lagerung (14) so ausgebildet, daß sie in vertikaler Richtung biegeweich und in horizontaler Richtung biegehart ist. Vorzugsweise wird die federnde Lagerung als Elastomerlager (14) ausgebildet.

## Beschreibung

Die Erfindung betrifft ein Wägemodul zur Verwiegung seitlich neigbarer Lasten gemäß dem Oberbegriff des Patentanspruchs 1.

Bei der Verwiegung von bewegbaren Lasten, die sich dadurch seitlich neigen können, entstehen meist hohe horizontale Zwangskräfte, die leicht zu Meßfehlern führen. So entstehen beispielsweise bei der Verwiegung von Fahrzeugaufbauten oder dessen Ladungen durch Fahrzeugschrägstellungen erhebliche horizontale Kräfte, die in das Fahrzeugchassis abgeleitet werden müssen, ohne dabei Einfluß auf das Wiegeergebnis zu nehmen. Auch bei Behältern, die durch Windkräfte oder einseitige Wärmeausdehnung horizontal bewegt werden, entstehen in dessen Wägestützen größere horizontale Querkräfte, die insbesondere bei höheren Genauigkeitsanforderungen nicht in das Wägeergebnis als Meßfehler eingehen dürfen. Deshalb werden häufig Krafteinleitungselemente vorgesehen, durch die die Gewichtskräfte möglichst frei von horizontalen Lagerkräften in die Wägevorrichtung eingeleitet werden. Dies hat aber den Nachteil, daß die bewegbaren Aufbauten instabil auf ihren Lagerpunkten aufliegen und deshalb bei großen Windkräften oder Fahrbeschleunigungen bzw. Abbremsen gegen Umfallen, Abheben oder Beschädigungen besonders gesichert werden müssen.

Aus der DE 196 19 109 C1 ist eine Wägestütze zur Verwiegung von Fahrzeugaufbauten oder deren Ladungen bekannt, die im wesentlichen aus einer Wägezelle und einer mechanischen Verriegelungseinrichtung besteht. Dabei ist die Wägezelle als Pendelstütze ausgebildet, die obere und untere gewölbte Druckflächen besitzt, durch die bei einer Schrägstellung des Fahrzeugs eine gewisse Winkelverschiebung eintritt, ohne daß dies zu einer meßwertverfälschenden Kraftnebenschlußkopplung führen würde. Diese Horizontalverschiebung wird durch zwei Klemmbacken der Verriegelungsvorrichtung begrenzt, die in einem seitlichen Abstand eine Lagerglocke umgeben, die die Wägezelle überdeckt und an der die Aufbauten befestigt sind. Wegen dieser fehlenden seitlichen Lagerung würde die Lagerglocke während des Fahrbetriebs an den Klemmbacken anschlagen, so daß außerhalb des Wägebetriebs die Lagerglocke durch die Verriegelungsvorrichtung seitlich eingeklemmt wird. Diese Klemmvorrichtung ist mit einem aufwendigen Hydraulikzylinder ausgestattet, der über einen Kniehebelbetrieb die eine Klemmbacke gegenüber der anderen Ortsfesten verschiebt, um die Lagerglocke außerhalb des Wägebetriebs nach allen Seiten zu fixieren. Ein derartiger apparativer Aufwand ist für die meisten Wägeaufgaben zu kostenintensiv, so daß derartige Aufbauverwiegungen nur für spezielle Fälle eingesetzt werden.

Aus der DE 295 21 150 U1 ist eine Wägevorrichtung für Fahrzeuge bekannt, durch die der Fahrzeugaufbau gegenüber dem Fahrzeugchassis verwogen werden kann. Dabei ist der Fahrzeugaufbau auf vier Wägezellen gegenüber dem Fahrzeugchassis gelagert. Der Fahrzeugaufbau ist bei einer geneigten Stellung des Fahrzeugs gegenüber einer horizontalen Verschiebung durch horizontale Lenkerstangen in Längs- und Querrichtung gesichert. Die Anordnung derartiger Lenkerstangen ist relativ aufwendig und erfordert einen nicht unerheblichen Umbauaufwand am Fahrzeug. Insbesondere ist eine derartige Lenkerstangenanordnung nicht kraftnebenschlußfrei für hohe Fahrzeugaufbauten und von windbewegten Hochbehältern ausführbar, da dort häufig große Kippmomente auftreten, was zu Meßfehlern führen würde.

Aus der DE 296 01 398 U1 ist ein Wägeelement bekannt, das zur Wägung von geneigten Fahrzeugaufbauten vorgesehen ist. Dieses Wägeelement besteht aus einer Lagerschale und einem Schwenkelement, das sich in Meßrichtung auf eine darin gelagerte Wägezelle abstützt. Durch diese kugelartige Lagerung des Schwenkelements in der Lagerschale ist eine stabile Lagerung von Fahrzeugaufbauten oder auch von Hochbehältern nach allen Richtungen gewährleistet. Allerdings entstehen zwischen den Lagerelementen Reibungsverluste, die zu Meßfehlern führen und die je nach Schwenkbereich auch unterschiedlich sein können.

Der Erfindung liegt deshalb die Aufgabe zugrunde, eine Wägevorrichtung für neigbare Lasten zu schaffen, die die Gewichtsbelastung möglichst genau erfaßt und dies unter einfachster Ausgestaltung.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß die Verwiegung von Lasten, die durch Windbelastung, einseitige Wärmeausdehnung oder Transport gegenüber der Waagerechten geneigt oder geschwenkt wurden, dadurch kraftnebenschlußfrei zu erfassen sind, daß die Gewichtskraft durch die biegeweichen Federelemente in Meßrichtung frei von parasitären Kräften in die Wägezelle einleitbar ist, während die horizontalen Kräfte durch biegesteife Federelemente von den Gehäusewänden oder von ortsfesten Geräteteilen aufgenommen werden. Dadurch wird vorteilhafterweise auch gleichzeitig eine horizontale Dämpfung von stoßartigen oder dynamischen horizontalen Belastungen beispielsweise während des Fahrbetriebs erreicht, durch die eine Beschädigung oder Zerstörung der Wägezelle oder der horizontalen Lagerelemente weitgehend verhindert wird.

Durch die biegeweiche Krafteinleitung in Meßrichtung und die biegesteife Abstützung in Horizontalrichtung unter Anwendung einer pendelnden Wägezellenlagerung wird eine weitgehend reibungsfreie Krafteinleitung auch bei einer geneigten Last erreicht, so daß vorteilhafterweise das Meßergebnis nicht durch Reibungskräfte verfälscht werden kann.

Ein derartiges Wägemodul mit einer pendelnd gelagerten Wägezelle in einer Gehäuseeinheit mit einer federnd gelagerten Krafteinleitungseinheit hat den Vorteil, daß eine solche Wägeeinrichtung vielfältig einsetzbar ist. So können derartige Wägemodule sowohl bei mobilen Fahrzeugen auf einfache Weise zwischen Aufbauteilen und Chassisteilen befestigt werden, ohne aufwendige Änderungen am Fahrzeug vornehmen zu müssen, da die Module kompakt ausführbar sind und im Fahrbetrieb Seitenstabilität gewährleisten. Auch zur Verwiegung hoher Silo- und Tankanlagen sind derartige Module einsetzbar, da sie durch die federnde Lagerung im Gehäuse einen spannungsfreien Einbau und Betrieb auch bei größeren einseitigen Wärmedehnungs- und Windbelastungen gewährleisten. Derartige Wägemodule eignen sich auch vorteilhaft zur Verwiegung von fest eingebauten belastbaren Teilen, die lediglich durch Bauteiltoleranzen und Wärmeausdehnungsverhalten zu geneigten Lastverteilungen führen.

Bei einer besonderen Ausgestaltung der Erfindung ist die Krafteinleitungseinheit mit einer federnden Lagerung aus hermetisch dichten Elastomerlagern zwischen den Seitenwänden der Gehäuseeinheit und dem Krafteinleitungselement ausgestattet, so daß dadurch vorteilhaft eine gute Staub- und Feuchtigkeitsabdichtung der Wägezelle erreichbar ist, so daß derartige Wägemodule vorteilhaft auch bei ungünstigen Umweltbedingungen einsetzbar sind.

Bei einer weiteren besonderen Ausführung der Erfindung ist die Gehäuseeinheit durch ein Abdeckteil nach oben begrenzt, durch das die Krafteinleitungseinheit nach oben hinausragt. Dabei ist zwischen der Krafteinleitungseinheit und den Innenflächen des Abdeckteils ein vorgebbarer horizontaler und vertikaler Ringspalt vorgesehen, durch den das Abdeckteil als Anschlagelement wirkt. Vorteilhafterweise ist durch dieses Anschlagelement auch eine Abhebesicherung realisiert und ein maximal zulässiger Neigungswinkel vorgebbar, so daß durch das Wägemodul eine stabile Lagerung nach allen Raumrichtungen erreicht wird.

Eine spezielle Ausgestaltung des Wägemoduls sieht eine runde rotationssymmetrische Ausgestaltung der Krafteinleitungseinheit und der Wägezelle um eine zentrale Mittelachse vor, wodurch vorteilhafterweise eine gleichmäßige Querkraftempfindlichkeit erreicht wird. Dadurch wird gleichzeitig beim Einsatz in mobilen Fahrzeugen eine Vereinfachung der Justage und der Eichung erzielt, da dann das Fahrzeug nur in einer Raumrichtung in Schiefstellung mit einer einheitlichen Neigungskorrektur eichtechnisch überprüft werden muß.

Bei einer weiteren speziellen Ausbildung der Erfindung ist vorgesehen, das Wägezellenelement in dem Gehäuseelement elektrisch isolierend zu lagern oder die Gehäuseeinheit elektrisch isolierend an den Chassisteilen zu befestigen, so daß beispielsweise bei Schweißarbeiten am Fahrzeug keine zerstörenden Schweißströme in die Wägezelle gelangen können. Vorteilhafterweise ist dabei gleichzeitig eine Zustandsanzeige des Elastomerelements vorgesehen, indem zwischen dem Krafteinleitungselement und der elektrisch isoliert angeordneten Gehäuseeinheit eine Kontrollspannung angelegt wird, durch die bei Berührung der Krafteinleitungsteile mit der Gehäuseeinheit ein Stromkreis geschlossen wird, der eine unzulässige Schrägstellung oder einen Elastomerverschleiß signalisiert.

Die Erfindung wird anhand eines Ausführungsbeispiels, das in der Zeichnung dargestellt ist, näher erläutert. Es zeigen:
- Fig. 1:: eine schematische Darstellung eines Wägemoduls, und
- Fig. 2:: eine schematische Darstellung einer Verschleißanzeige und einer unzulässigen Schrägstellungserkennung.

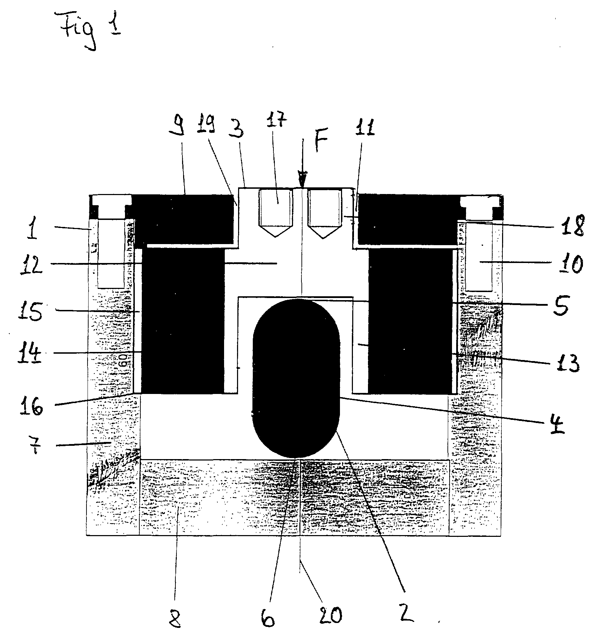

In Fig. 1 der Zeichnung ist ein Wägemodul schematisch dargestellt, das eine Gehäuseeinheit 1 enthält, in der eine Pendelstabwägezelle 2 vorgesehen ist, die aus einem Druckstab 4 und an den Stirnseiten vorhandenen sphärischen Kraftein- 5 und -ausleitungsflächen 6 besteht. Dabei bildet der Druckstab 4 den Meßkörper, an dem Dehnungsmeßstreifen appliziert sind, mit denen die eingeleitete Kraft ermittelt wird. Es können auch andere rotationssymmetrische Wägezellen eingesetzt werden, die über Pendelstützen verfügen und damit eine kraftnebenschlußfreie Gewichtsermittlung gewährleisten. Dabei sind die Pendelstützen mit oberen und unteren gewölbten Druckflächen ausgestattet, durch die die Krafteinleitungseinheit in begrenztem Maße horizontal verschiebbar ist. Derartige Wägezellen 2 haben den Vorteil, daß auch bei einer leicht schrägen Krafteinleitung die Kraftrichtung weitgehend in Meßrichtung verläuft, ohne daß Kraftnebenschlußkopplungen auftreten.

Die Wägezelle 2 ist in einer zylinderförmigen rotationssymmetrischen metallenen Gehäuseeinheit 1 angeordnet, die aus einer umgebenden vertikalen Gehäusewand 7, einem unteren Bodenteil 8 und einem oberen kreisförmigen Abdeckteil 9 besteht. Dabei ist das untere Bodenteil 8 fest mit der umgebenden Gehäusewand 7 verbunden, wobei der obere Abdeckteil 9 durch eine Schraubverbindung 10 an der umgebenden Gehäusewand 7 befestigt ist. Der obere Abdeckteil 9 besitzt eine zentrale Öffnung 11, durch die ein Befestigungsstutzen 18 der Krafteinleitungseinheit 3 nach oben aus der Gehäuseeinheit 1 hinausragt. Die Gehäuseeinheit 1 kann aber auch recht- und mehreckig ausgebildet sein, sofern dies aus technischen Gründen vorteilhaft ist.

Die Krafteinleitungseinheit 3 besteht aus einem zentralen Mittelteil 12 , der nach unten eine rohrförmige Verlängerung 13 besitzt, die zur Aufnahme der Wägezelle 2 dient. Der zentrale Mittelteil 12 liegt mit seiner unteren Begrenzungsfläche oben auf der oberen Krafteinleitungsfläche 5 der Wägezelle 2 auf und besitzt einen seitlichen Abstand zur Wägezelle 2, um eine horizontale Verschiebung zu ermöglichen. Dieses zentrale Mittelteil 12 ist auf etwa zwei Drittel seiner axialen unteren Außenfläche koaxial mit einem Federelement 14 aus einem Elastomer umgeben, das andererseits von einem äußeren Metallring 15 umgeben ist. Dabei ist das elastomere Federelement 14 sowohl an den zentralen Mittelteil 12, als auch an der Innenwand des Metallrings 15 durch eine Vulkanisations- oder Klebeverbindung befestigt. Das Federelement 14 ist dabei so ausgebildet, daß es in seiner vertikalen Richtung biegeweich und in horizontaler Richtung biegehart ist. Vorteilhafterweise wird ein derartiges elastomeres Federelement 14 aus einer speziellen Gummimischung gefertigt. Ein derartiges Federelement 14 könnte aber auch aus mehreren Blattfeder- oder Tellerfederelementen bestehen, die zwischen dem zentralen Mittelteil 12 und der umgebenden Gehäusewand 7 angeordnet wären.

Die Krafteinleitungseinheit 3 wird bei der Montage nach dem Einsatz der Wägezelle 2 von oben in die Gehäuseeinheit 1 eingesetzt. Dabei wird der Metallring 15 paßgenau in eine vorgesehene vertikale ringförmige Aussparung 16 an der inneren Gehäusewand 7 eingesetzt, so daß die Krafteinleitungseinheit 3 im Gehäuse 1 vertikal nach unten und horizontal fixiert ist. Die Krafteinleitungseinheit 3 besitzt nach oben als Fortsetzung des zentralen Mittelteils 12 einen Befestigungsstutzen 18, der Gewindebohrungen 17 aufweist, mit dessen Hilfe die Belastungsteile mit dem Wägemodul verbunden werden. Dabei steht der Befestigungsstutzen 18 einige Millimeter über der oberen Abdeckfläche 9 hinaus, um eine ungehinderte Krafteinleitung zu ermöglichen. Der Befestigungsstutzen 18 ist als Fortsetzung des zentralen Mittelteils 12 nach oben mit verringertem Außendurchmesser ausgebildet. Zwischen den Außenflächen des Befestigungsstutzens 18 und den Innenflächen des Abdeckteils 9 ist sowohl ein horizontaler als auch ein vertikaler Ringspalt 19 vorgesehen, dessen Breite so vorgegeben ist, daß sowohl eine maximale Neigung zugelassen wird als auch eine Abhebesicherung nach oben gewährleistet ist.

Wird nun ein derartiges Wägemodul oder meist mehrere Wägemodule zwischen einer zu wiegenden Last und einer lastaufnehmenden Vorrichtung oder Chassisteilen befestigt, so erfolgt die Lasteinleitung F über den Befestigungsstutzen 18. Soweit die Last F vertikal in die Krafteinleitungseinheit 3 gerichtet ist, wird diese über das biegeweiche Federelement 14 vertikal in die Wägezelle 2 eingeleitet, die sich gegenüber dem Bodenteil 8 der Gehäuseeinheit 1 abstützt. Damit ermittelt die Wägezelle 2 eine Gewichtskraft F, die der Lasteinleitung proportional ist. Unter Berücksichtigung der Taralast kann mit einer derartigen oder mit mehreren Wägemodulen das Gewicht von Fahrzeugladungen oder der Gewichtsinhalt von Tank- oder Siloanlagen ermittelt, angezeigt, dokumentiert und weiterverarbeitet werden.

Steht hingegen ein solches Fahrzeug oder ein Silobehälter gegenüber der Waagerechten leicht geneigt, so erfolgt die Belastung nicht genau senkrecht, sondern schräg zur Vertikalen geneigt. Durch die biegeweiche Lagerung der Krafteinleitungseinheit 3 in vertikaler und die biegesteife Lagerung in horizontaler Richtung wird auch der zentrale Mittelteil 12 gegenüber der Vertikalen verschoben, so daß die Wägezelle 2 über die pendelnde Lagerung 5, 6 geneigt wird. Dadurch erfolgt die Krafteinleitung weitgehend in Meßrichtung der Wägezelle 2. Gleichzeitig wird die horizontale Kraftkomponente über das Federelement 14 in die Seitenfläche 7 der Gehäuseeinheit 3 übertragen, so daß keine Kraftnebenschlußkopplung erfolgt. Unter Berücksichtigung eines Neigungswinkels, der über einen separaten nicht dargestellten Neigungssensor erfaßbar ist, kann aus der gemessenen vertikalen Kraftkomponente rechnerisch das Gewicht der geneigten Last ermittelt werden. Dabei hat sich in der Praxis gezeigt, daß mit derartigen Wägemodulen Lasten mit Neigungswinkeln bis zu 10° Abweichung von der Vertikalen eichfähig ermittelbar sind.

Durch die rotationssymmetrische geschlossene Krafteinleitungseinheit 3 wird eine gleichmäßige seitliche Verschwenkung erreicht, so daß es auch bei langgestreckten geneigten Aufbauverwiegungen nicht auf die Richtung zur Fahrzeuglängs- oder -querachse ankommt, was auch die Eichprüfung vereinfacht. Gleichzeitig wird durch die geschlossene und paßgenaue Krafteinleitungseinheit 3 eine hermetisch abgeschlossene Wägevorrichtung 2 erreicht, die auch bei ungünstigen Umwelteinflüssen weitgehend gegen Verschmutzung und Feuchtigkeitseinwirkung geschützt ist.

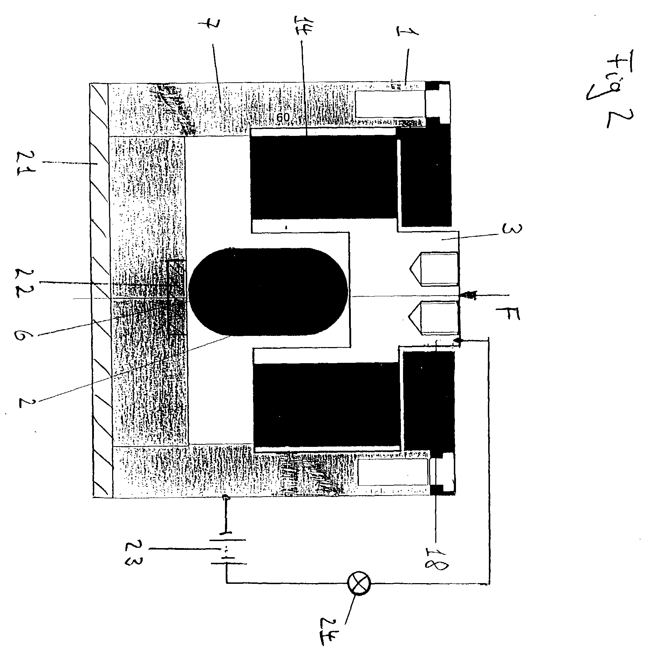

Bei der Verwiegung von Fahrzeugaufbauten oder Fahrzeugzuladungen hat das Elastomerlager 14 den Vorteil, daß hierdurch während des Fahrbetriebs dynamische horizontale Belastungen hervorragend gedämpft werden, wodurch eine Beschädigung der Wägezelle und der horizontalen Lagerelemente 14 weitgehend ausgeschlossen ist. Zur Vermeidung von Schäden an der Wägezelle 2 durch in der Nähe erfolgende Elektroschweißverfahren hat sich eine elektrisch isolierte Anordnung der Wägezelle 2 als vorteilhaft erwiesen, die in Fig. 2 der Zeichnung schematisch dargestellt ist. Dazu ist auch eine isolierte Anordnung der Gehäuseeinheit 1 gegenüber der Befestigung am Fahrzeugchassis oder anderen kraftaufnehmenden Geräteteilen durch eine Isolationsschicht 21 vorgesehen. Gleichzeitig stützt sich die Wägezelle 2 an ihrem unteren Auflagepunkt 6 auf einem isolierenden Keramiklager 22 oder Kunststofflager ab, so daß auch die Wägezelle 2 gegenüber der Gehäuseeinheit 1 isoliert ist. Zwischen einer Gehäusewand 7 und dem Befestigungsstutzen 18 der Krafteinleitungseinheit 3 ist über eine Signalisierungseinrichtung 24 eine Kontrollspannung 23 geschaltet, wodurch eine Verschleiß- und maximal zulässige Neigungserkennung möglich ist. Bei einem übermäßigen Verschleiß des Elastomerlagers 14 oder der Überschreitung der maximal zulässigen Neigung würde eine Kontaktierung des Befestigungsstutzens 18 mit den isolierten Gehäuseteilen erfolgen, wodurch die Signalisierungseinrichtung 24 betätigt würde. In einer weiteren Schaltungsvariante könnte vorgesehen werden, daß gleichzeitig die Wägung unterbrochen oder ein Lagerverschleiß bzw. Neigungsüberschreitung dokumentiert und protokolliert würde.

## Patentansprüche

1. Wägemodul zur Verwiegung von seitlich neigbarer Lasten, bestehend aus einer pendelnd gelagerten Wägezelle (2), die von einer Gehäuseeinheit (1) umgeben ist, die Krafteinleitungs- und Kraftaufnahmeelemente enthält, **dadurch gekennzeichnet, daß** die Krafteinleitungselemente als Krafteinleitungseinheit (3) ausgebildet sind und Federelemente (14) besitzen, die gegenüber der Gehäuseeinheit (1) eine federnde Lagerung bilden, wobei die Lagerung in vertikaler Richtung biegeweich und in horizontaler Richtung biegehart ist.

2. Wägemodul nach Anspruch 1, **dadurch gekennzeichnet, daß** die Krafteinleitungseinheit (3) aus einem Befestigungsstutzen (18), einem zentralen Mittelteil (12) mit rohrförmiger Verlängerung (13) und ein diese umgebende Federelemente (14) besteht.

3. Wägemodul nach Anspruch 1 oder 2, **dadurch gekennzeichnet, daß** die Federelemente (14) als Elastomerfeder-, Blattfeder- oder Tellerfederelemente ausgebildet sind.

4. Wägemodul nach einem der vorhergehenden Ansprüche, **dadurch gekennzeichnet, daß** die Elastomerfeder (14) als Vollringfeder ausgebildet ist, die mit ihrer Innenringfläche fest an der Mantelfläche des zentralen Mittelteils (12) und mit der Außenringfläche an einem äußeren Metallring (15) befestigt ist.

5. Wägemodul nach einem der vorhergehenden Ansprüche, **dadurch gekennzeichnet, daß** die Gehäuseeinheit (1) als Hohlzylinder ausgebildet ist, der aus einer umgebenden rohrförmigen Gehäusewand (7), einem Bodenteil (8) und einem aufschraubbaren Abdeckteil (9) mit einer zentralen Öffnung (11) besteht.

6. Wägemodul nach einem der vorhergehenden Ansprüche, **dadurch gekennzeichnet, daß** die Wägezelle (2) symmetrisch zu einer zentralen Mittelachse (20) angeordnet ist und sich unten auf dem Gehäuseboden (8) als Kraftaufnahmeelement abstützt, wobei die Elastomerfeder (14) durch den Metallring (15, der in einer ringförmigen Aussparung (16) der Gehäuseinnenwand (7) anliegt, horizontal und vertikal fixiert ist.

7. Wägemodul nach einem der vorhergehenden Ansprüche, **dadurch gekennzeichnet, daß** der Befestigungsstutzen (18) der Krafteinleitungseinheit (3) durch eine durchmesserverkleinernde Fortsetzung des zentralen Mittelteils (12) gebildet wird, die einen vorgebbaren horizontalen und vertikalen Ringspalt (19) zur Öffnung (11) und zur Unterseite des Abdeckteils (9) bildet.

8. Wägemodul nach einem der vorhergehenden Ansprüche, **dadurch gekennzeichnet, daß** die Wägezelle als Pendelstabwägezelle (2) oder Biegeringwägezelle mit Pendelelementen ausgebildet ist.

9. Wägemodul nach einem der vorhergehenden Ansprüche, **dadurch gekennzeichnet, daß** die Wägezelle (2) gegenüber der Gehäuseeinheit (1) und die Gehäuseeinheit (1) gegenüber kraftaufnehmenden Geräteteilen elektrisch isoliert ist und zwischen der Gehäuseeinheit (1) und dem leitenden zentralen Mittelteil (12) bzw. dem Befestigungsstutzen (18) eine Kontrollspannung (23) mit Signalisierungsvorrichtung (24) geschaltet ist.
